# EUROPÄISCHE PATENTSCHRIFT

(11) **EP 0 724 716 B1**
(45) Veröffentlichungstag und Bekanntmachung des Hinweises auf die Patenterteilung: **04.08.1999**
(21) Anmeldenummer: 94929552.1
(22) Anmeldetag: 15.10.1994
(51) Int. Cl.: G01M 3/20, F25B 39/00

(54) **Integrale Lecksuche an einem Verdampfer für Kältemaschinen mit weiterer Messung**
Integral leakage detection in an evaporator for a refrigerating machine with a further measurement
Détection de fuites intégrale dans un évaporateur pour une machine frigorifique avec une autre mesure

(30) Priorität: 21.10.1993 DE 4335894
(43) Veröffentlichungstag der Anmeldung: 07.08.1996
(73) Patentinhaber: Balzers und Leybold Deutschland Holding Aktiengesellschaft, 63450 Hanau (DE)
(72) Erfinder: FLOSBACH, Rudolf, D-51688 Wipperfürth (DE); KLEIN, Joachim, D-51143 Köln (DE); NOTHHELFER, Markus, D-50169 Kerpen (DE)
(74) Vertreter: Leineweber, Jürgen, Dipl.-Phys.
(86) Internationale Anmeldenummer: EP9403405
(87) Internationale Veröffentlichungsnummer: WO9511434

(56) Entgegenhaltungen:
- EP-A- 0 477 640

## Beschreibung

Umweltschutzgründe haben inzwischen dazu geführt, daß bei Kältemaschinen, insbesondere Kompressionskältemaschinen für Kühlschränke, die bisher verwendeten, FCKW-haltigen Kühlmittel durch neue Kühlmittel, wie Propan, Butan, ersetzt werden. Bei der Verwendung derartiger Kühlmittel besteht eine Explosionsgefahr. An die Dichtheit des Kühlmittelkreislaufs müssen deshalb erhöhte Anforderungen gestellt werden.

Bestandteil des Kühlmittelkreislaufs ist ein Verdampfer, in den kondensiertes Kühlmittel durch eine Düse hineinströmt. Dabei findet ein Verdampfungs- und Abkühlungsprozeß statt. Der Verdampfer kühlt sich ab und ist damit in der Lage, seiner Umgebung Wärme zu entziehen (Kälteleistung). Der Kühlmittelkreislauf einer Kompressionskältemaschine kann einen oder mehrere parallel angeordnete Verdampfer aufweisen.

Bei Haushaltskühlschränken werden in der Regel Plattenverdampfer eingesetzt. Diese bestehen aus zwei z.B. durch Kleben oder durch Walzen dicht miteinander verbundenen Platten, vorzugsweise aus Aluminium. In mindestens einer der Platten ist der vom Kühlmitteldampf durchströmte Kanal durch Wölbung eingeprägt. Auch die Eintrittsdüse ist Bestandteil des Plattenverdampfers. Sie wird beispielsweise dadurch hergestellt, daß der Kühlmittelkanal im Einlaßbereich mit einem zangenartigen Werkzeug verengt wird.

Die Lebensdauer von Kältemaschinen, insbesondere von Kühlschränken hängt maßgeblich von der Dichtheit des Kältemittelkreislaufs ab. Es ist deshalb bekannt, den Kältemittelkreislauf einer Kältemaschine nach dem Prinzip der Schnüffellecksuche auf Lecks zu untersuchen. Mit Hilfe eines sogenannten Schnüfflers werden leckverdächtige Stellen von Hand abgetastet. Durch den Schnüffler werden ständig Gase angesaugt und einem auf ein bestimmtes Testgas eingestellten Testgasdetektor zugeführt. Die Empfindlichkeit der Schnüffellecksuche ist begrenzt. Außerdem besteht bei diesem von Hand durchgeführten Lecksuchverfahren die Gefahr, daß durch menschliches Versagen eine leckverdächtige Stelle entweder gar nicht abgetastet oder ein dort befindliches Leck übersehen wird. Schließlich ist diese Art der Lecksuche zeitaufwendig.

Zur Verbesserung der Empfindlichkeit der Lecksuche bei Verdampfern wird er integral auf Lecks untersucht (EP-A1-477 640). Bei dieser Art der Lecksuche wird der einen Hohlraum aufweisende Prüfling in eine Kammer eingesetzt. Der Innenraum des Prüflings wird mit einem die Kammerwand durchsetzenden Anschluß verbunden. An die Kammer selbst ist ein testgasempfindlicher Detektor angeschlossen. Die Lecksuche wird in der Weise durchgeführt, daß in den Innenraum des Prüflings, vorzugsweise unter erhöhtem Druck, Testgas eingebracht wird. Die Kammer selbst und damit die Umgebung des Prüflings wird evakuiert. Ist der Prüfling leck, dringt Testgas in die Kammer ein und wird vom testgasempfindlichen Detektor registriert.

Mit Hilfe der integralen Lecksuche können im Vergleich zur Schnüffellecksuche wesentlich höhere Empfindlichkeiten erreicht werden, da hohe Differenzdrücke im Bereich der leckverdächtigen Wandungsbereiche erzeugt werden können. Die Lecksuche findet im Bereich aller leckverdächtigen Stellen gleichzeitig statt. Bei der Verwendung von Helium als Testgas und Differenzdrücken von einigen bar ist die integrale Lecksuche um zwei Zehnerpotenzen empfindlicher als die Schnüffellecksuche. Die Gefahr, daß Leckstellen des Verdampfers übersehen werden, besteht nicht mehr. Bei entsprechendem apparativen Aufwand kann die integrale Lecksuche wesentlich schneller als die Schnüffellecksuche durchgeführt werden.

Der vorliegenden Erfindung liegt das Ziel zugrunde, weitere Eigenschaften von Prüflingen mit einem Hohlraum zu untersuchen. Bei Verdampfern für Kältemaschinen können das Eigenschaften sein, die für den Wirkungsgrad der Kältemaschine entscheidend sind. Eine Eigenschaft dieser Art ist beispielsweise das Verhältnis zwischen dem Volumen des Kältemittelkreislaufs und der im Kältemittelkreislauf befindlichen Kältemittelmenge. Im Zuge des oben erwähnten Verdampferplatten-Herstellprozesses sind relativ große Streuungen des Volumens des Verdampfer-Kältemittelkanals und auch der Düseneigenschaften unvermeidbar. Das erwähnte Verhältnis streut deshalb ebenfalls, da ein Durchschnittsvolumen des Kältemittelkreislaufs angenommen wird und die Kältemittelfüllmenge immer gleich bleibt. Weiterhin haben auch die Eigenschaften der Eintrittsdüse Einfluß auf den Wirkungsgrad der Kältemaschine.

Der Erfindung liegt deshalb die Aufgabe zugrunde, neben der Dichtheit des Prü lings auch weitere Eigenschaften erkennen und messen zu können.

Diese Aufgabe wird verfahrensmäßig nach Anspruch 1 und einrichtungsmäßig nach Anspruch 7 gelöst.

Die Erfindung beruht auf der Erkenntnis, daß nur eine geringfügige Modifikation der für die integrale Lecksuche erforderlichen technischen Mittel notwendig ist, um genaue Kenntnisse über die erwähnten weiteren Eigenschaften des Prüflings zu erhalten. In Kenntnis dieser Daten kann beispielsweise bei Messungen an Verdampfern die Kältemittelfüllmenge jedem Verdampfer individuell angepaßt werden, so daß optimale Wirkungsgrade erreicht werden können.

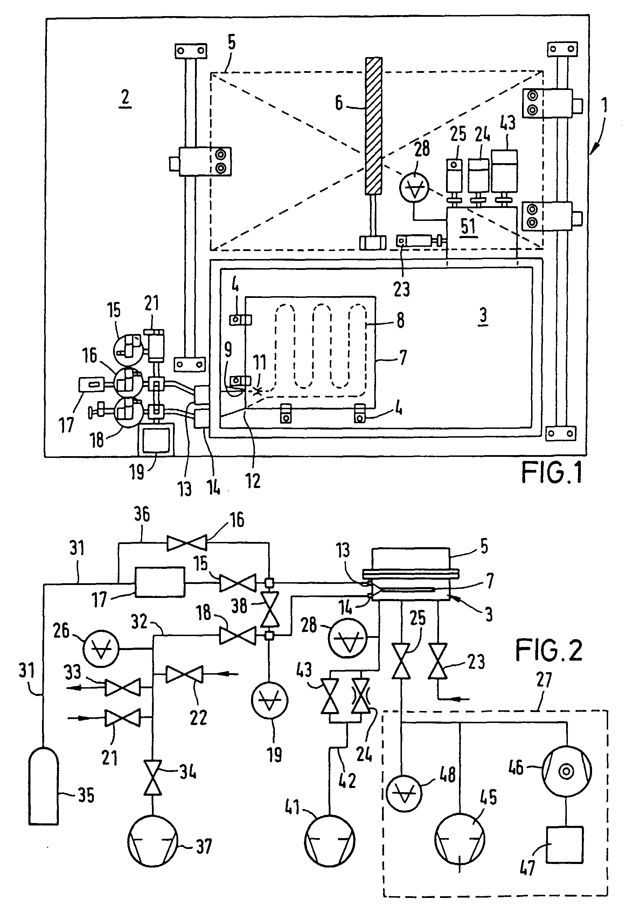

Weitere Vorteile und Einzelheiten der Erfindung sollen anhand eines in den Figuren 1 und 2 dargestellten Ausführungsbeispiels erläutert werden, das die Untersuchung eines Verdampfers betrifft. Es zeigen:
- Figur 1: eine Draufsicht auf eine für die Durchführung des erfindungsgemäßen Verfahrens geeignete Einrichtung und
- Figur 2: ein Schaltschema für eine Einrichtung zur Durchführung des Untersuchungsverfahrens.

Die verschiedenen Messungen werden in der folgenden Reihenfolge durchgeführt:
- Messung des Durchflusses durch die Düse 11
- Messung des Volumens des Kühlkanals 8
- Lecktest.

Vor der Durchführung der Messungen wird der Verdampfer 7 in die Kammer 3 eingesetzt und fixiert (Fixierblöcke 4). Die Eintrittsöffnung 9 des Verdampfers 7 wird mit dem Hochdruckanschluß 13, die Auslaßöffnung 12 mit dem Niederdruckanschluß 14 verbunden. Danach wird die Kammer 3 mit Hilfe des Kammerdeckels 5 vakuumdicht verschlossen. Die Verschiebung des Kammerdeckels 5 erfolgt mit Hilfe des Pneumatikzylinders 6. Die Kammer 3 und die Mittel zur Verschiebung des Deckels 5 sind auf einer Arbeitsfläche 2 montiert. Oberhalb der Arbeitsfläche 2 befinden sich Bedienungs- und Anzeigeeinrichtungen. Ventile, Vakuumpumpen, Meßröhren und dergleichen befinden sich unterhalb der Arbeitsfläche 2.

Unmittelbar nach dem Anschluß des Verdampfers 7 an die vorzugsweise mit zwischenevakuierten Doppeldichtungen ausgerüsteten Prüfanschlüsse 13, 14 kann mit der Durchflußmessung begonnen werden. Dazu werden das in der Leitung 31 befindliche, in Reihe mit dem Flowmeter 17 geschaltete Ventil 15, das in der Leitung 32 befindliche Ventil 18 und das Entspannungsventil 33 geöffnet. Die übrigen Ventile - Ventil 16, Helium-Versorgungsventil 21, Flutventil 22, Evakuierventil 34 - sind während der Durchflußmessung geschlossen. Bei offenem Ventil 15 steht der Hochdruckanschluß 13 und damit die Einlaßöffnung 9 des Verdampfers 7 mit der Druckluftquelle 35 in Verbindung. Diese bewirkt eine Gasströmung durch die Leitung 31 mit dem Flowmeter 17 und dem Ventil 15, durch den Kühlmittelkanal 8 im Verdampfer 7 und durch die Leitung 32 mit dem Ventil 18 sowie durch das Entspannungsventil 33. Die Größe der Gasströmung hängt von den Eigenschaften der Eintrittsdüse 11 des Verdampfers 7 ab. Konkrete Daten für die Durchflußmenge lassen sich aus dem von der Preßluftquelle erzeugten Druck (beispielsweise 10 bar) und dem vom Flowmeter gelieferten Wert berechnen.

Um die Durchflußmessung möglichst schnell durchführen zu können, ist dem Flowmeter 17 und dem Ventil 15 eine Bypassleitung 36 zugeordnet, in der sich das Ventil 16 befindet. Dieses wird unmittelbar vor der Durchflußmessung geöffnet und sofort wieder geschlossen. Dadurch wird sichergestellt, daß der von der Druckluftquelle 35 erzeugte Druck zu Beginn der Durchflußmessung in voller Höhe vor der Düse 11 ansteht. Zur sich unmittelbar daran anschließenden Durchflußmessung reicht dann eine Meßzeit von wenigen Sekunden aus.

Zur sich anschließenden Durchführung der Volumenmessung wird lediglich das Ventil 18 geschlossen. Dadurch findet im Hohlraum des Prüflings 7 bzw. im Kältemittelkanal 8 ein Druckaufbau statt. Mit Hilfe des Druckmeßgerätes 19 wird dieser Druckaufbau registriert. Es hat sich gezeigt, daß bereits äußerst genaue Volumenmessungen durchgeführt werden können, wenn die Zeitmessungen in einem Druckbereich vorgenommen werden, in dem der zeitliche Druckaufbau im Kühlmittelkanal 8 praktisch noch linear ist. Das Volumen des Kühlmittelkanals 8 ist der gemessenen Zeit proportional. Aus der gemessenen Zeit und dem in der vorangegangenen Messung vom Flowmeter 17 gelieferten Wert läßt sich das Volumen des Kühlmittelkanals 8 im Prüfling 7 exakt bestimmen.

Bei einem anderen Verfahren wird der Messung der Druckanstieg zugrundegelegt, der im Kühlmittelkanal 8 stattfindet, und zwar ebenfalls in einem Druckbereich, in dem der zeitliche Druckanstieg praktisch noch linear ist. Je steiler die Druckanstiegskurve ist, desto kleiner ist das Volumen des Kühlmittelkanals 8. Aus dem vom Flowmeter 17 während der Druchflußmessung gelieferten Wert und dem Druckanstieg kann das Volumen des Kühlmittelkanals 8 berechnet werden.

An die Durchflußmessung und an die Volumenmessung schließt sich die Leckuntersuchung des Prüflings an. Dieses geschieht integral innerhalb der Kammer 3, indem der Kühlmittelkanal 8 mit Helium gefüllt wird. Ist ein Leck vorhanden, dringt Helium in die inzwischen evakuierte Kammer 3 und wird vom Testgasdetektor 27 registriert.

Zur Füllung des Kühlmittelkanals 8 mit Helium werden das Ventil 15 geschlossen und die in der Leitung 32 befindlichen Ventile 18 und 34 geöffnet. Dadurch wird der Prüfanschluß 14 und damit die Auslaßöffnung des Prüflings 7 mit der Vakuumpumpe 37 verbunden. Zweckmäßig wird der Prüfling 7 auf einen Druck evakuiert, der im unteren Bereich des Grobvakuums liegt. Zur Füllung des Kühlmittelkanals 8 im Prüfling 7 mit Helium wird nach dem Schließen des Ventils 34 über das Ventil 31 eine Heliumquelle (z.B. mit 8 bar) an die Leitung 32 angeschlossen. Dieses Helium strömt in den Kühlmittelkanal 8 ein, so daß mit der Lecksuche begonnen werden kann. Mit Hilfe des Druckmeßgerätes 26 werden diese Vorgänge kontrolliert.

Um sowohl den Evakuierungsprozess als auch den Helium-Füllprozess möglichst schnell durchführen zu können, ist es zweckmäßig, die Leitungen 31 und 32 unmittelbar vor den Prüflingsanschlüssen 13, 14 kurzzuschließen. Dieses geschieht mit Hilfe des Ventiles 38. Bei offenem Ventil 38 sind Eintrittsöffnung 9 und Auslaßöffnung 12 des Prüflings 7 in der Evakuierungsphase mit der Vakuumpumpe 37 und in der Helium-Füllphase mit der Heliumquelle verbunden. Neben der Beschleunigung des Evakuierungs- und Füllprozesses wird darüberhinaus erreicht, daß die im Kühlmittelkanal 8 noch befindlichen Restgase gründlicher entfernt werden.

Vor der Durchführung der eigentlichen Lecksuche wird die Kammer 3 mit Hilfe der Vakuumpumpe 41 evakuiert. In der die Kammer 3 mit der Vakuumpumpe 41 verbindenden Leitung 42 befindet sich das Ventil 43, das zum Zwecke der Evakuierung der Kammer 3 geöffnet wird. Sobald in der Kammer 3 ein ausreichend niedriger Druck (oberer Feinvakuumbereich) erreicht wird, wird das Ventil 43 geschlossen. Die Druckkontrolle erfolgt mit Hilfe des Druckmeßgerätes 28.

Dem Ventil 43 ist ein Bypass mit dem Drosselventil 24 zugeordnet. Dieses ermöglicht es, den Evakuierungsvorgang nach dem Schließen des Ventils 43 mit reduzierter Pumpleistung fortzusetzen. Hierdurch erreicht man eine höhere Empfindlichkeit.

Die Zuschaltung des Leckdetektors 27 erfolgt mit Hilfe des Ventils 25. Beim dargestellten Ausführungsbeispiel umfaßt der Leckdetektor 27 die Vorvakuumpumpe 45, die Hochvakuumpumpe (Turbomolekularvakuumpumpe) 46 sowie das Massenspektrometer 47. Mit Hilfe der beiden Vakuumpumpen 45 und 46 wird im Massenspektrometer 47 der erforderliche Betriebsdruck (ca. 10⁻⁴ mbar) erzeugt. Die Kontrolle des Betriebsdruckes erfolgt mit Hilfe des Vakuummeßinstrumentes 48. Gegebenenfalls durch ein Leck im Prüfling 7 strömendes Helium gelangt entgegen der Förderrichtung der Hochvakuumpumpe 46 in das Massenspektrometer 47 (Contra-flow-Prinzip) und wird dort registriert. Nach dem Abschluß des Lecksuchschrittes wird das im Verdampfer 7 befindliche Helium über das Entspannungsventil 33 abgelassen. Die Kammer 3 wird über das Ventil 23 geflutet. Danach kann die Kammer 3 zum Zwecke des Wechsels des Prüflings 7 geöffnet werden.

Figur 1 zeigt, daß die Kammer 3 unterhalb der Tischfläche 2 mit einer seitlich angeordneten Zusatzkammer 51 ausgerüstet ist. An diese Kammer 51 sind die der Lecksuche dienenden Bauteile (Ventile 23, 24, 25, 43, Druckmeßgerät 28) angeschlossen. Die Vorteile dieser Lösung liegen darin, daß die lichte Höhe der Kammer 3 selbst und damit ihr Volumen klein gehalten werden kann. Außerdem wird vermieden, daß reduzierte Ansaugquerschnitte eingesetzt werden müssen und daß Gasströmungen, die beim Evakuieren und Belüften der Kammer 3 auftreten, Kräfte auf den Prüfling ausüben.

## Patentansprüche

1. Verfahren zur integralen Lecksuche an einem Verdampfer (7) für Kältemaschinen mit Hilfe einer für die Durchführung dieses Verfahrens geeigneten Einrichtung, wobei diese Einrichtung eine der Aufnahme des Verdampfers (7) dienende, vakuumdicht verschließbare Kammer (3) umfasst, die mit Prüflingsanschlüssen (13, 14) ausgerüstet ist, welche der Herstellung der Verbindung von Messeinrichtungen mit einer Eintrittsöffnung (9) sowie einer Austrittsöffnung (12) des Hohlraumes (8) des Verdampfers (7) dienen, dadurch gekennzeichnet, dass nach dem Einsetzen des Verdampfers (7) in die Kammer (3) neben der integralen Lecksuche mindestens eine weitere Messung durchgeführt wird, und zwar eine Messung des Durchflusses durch den Hohlraum (8) und/oder eine Messung des Volumens des Hohlraumes (8) des Verdampfers (7).

2. Verfahren nach Anspruch 1, dadurch gekennzeichnet, dass zunächst eine Durchflussmessung und danach die Leckuntersuchung durchgeführt werden.

3. Verfahren nach Anspruch 1, dadurch gekennzeichnet, dass zunächst eine Volumenmessung und danach die Leckuntersuchung durchgeführt werden.

4. Verfahren nach Anspruch 1, 2 oder 3, dadurch gekennzeichnet, dass nacheinander die DurchflussmesSung, die Volumenmessung und die Leckuntersuchung durchgeführt werden.

5. Verfahren nach einem der Ansprüche 1 bis 4, dadurch gekennzeichnet, dass zur Volumenmessung im Prüfling (7) eine Druckerhöhung erzeugt wird und dass der Berechnung des Volumens die Steilheit der Druckanstiegskurve zugrundegelegt wird, und zwar in einem Bereich, in dem der Druckanstieg praktisch noch linear ist.

6. Verfahren nach einem der vorhergehenden Ansprüche, dadurch gekennzeichnet, dass zur Durchführung der Lecksuche Helium als Testgas und ein nach dem Contra-flow-Prinzip arbeitender Leckdetektor (27) eingesetzt werden.

7. Einrichtung zur Durchführung eines Verfahrens zur integralen Lecksuche an einem Verdampfer (7) für Kältemaschinen mit Hilfe einer für die Durchführung dieses Verfahrens geeigneten Einrichtung, wobei diese Einrichtung eine der Aufnahme des Verdampfers (7) dienende, vakuumdicht verschließbare Kammer (3) umfasst, die mit Prüflingsanschlüssen (13, 14) ausgerüstet ist, welche der Herstellung der Verbindung von Messeinrichtungen mit einer Eintrittsöffnung (9) sowie einer Austrittsöffnung (12) des Hohlraumes (8) des Verdampfers (7) dienen, und wobei nach dem Einsetzen des Verdampfers (7) in die Kammer (3) neben der integralen Lecksuche mindestens eine weitere Messung durchgeführt wird, und zwar eine Messung des Durchflusses durch den Hohlraum (8) und/oder eine Messung des Volumens des Hohlraumes (8), dadurch gekennzeichnet, dass der Prüflingsanschluss (13) über eine Leitung (31) mit einer Druckgasquelle (35) in Verbindung steht und dass sich in der Leitung (31) ein Flowmeter (17) und ein Ventil (15) befinden.

8. Vorrichtung nach Anspruch 7, dadurch gekennzeichnet, dass dem Flowmeter (17) und dem Ventil (15) eine Bypassleitung (36) mit einem Ventil (16) zugeordnet ist.

9. Vorrichtung nach einem der Ansprüche 7 oder 8, dadurch gekennzeichnet, dass der Prüflingsanschluss (14) über eine Leitung (32) mit Ventilen (18, 34) an eine Vakuumpumpe (37) anschließbar ist.

10. Vorrichtung nach Anspruch 9, dadurch gekennzeichnet, dass in die Leitung (32) zwischen den Ventilen (18 und 34) Anschlußleitungen mit einem Entspannungsventil (33), einem Helium-Versorgungsventil (21) und einem Flutventil (22) münden.

11. Vorrichtung nach Anspruch 9 oder 10, dadurch gekennzeichnet, dass an die Leitung (32) zwischen den Ventilen (18 und 34) ein Druckmessgerät (26) angeschlossen ist.

12. Vorrichtung nach einem der Ansprüche 9, 10 oder 11, dadurch gekennzeichnet, dass an die Leitung (32) zwischen dem Prüflingsanschluss (14) und dem Ventil (18) ein Druckmessgerät (19) angeschlossen ist.

13. Vorrichtung nach einem der Ansprüche 7 bis 12, dadurch gekennzeichnet, dass der zwischen dem Prüflingsanschluss (13) und dem Ventil (15) gelegene Abschnitt der Leiktung (31) mit dem zwischen dem Prüfungsanschluss (14) und dem Ventil (18) gelegenen Abschnitt der Leitung (32) über das Ventil (38) miteinander verbindbar sind.

14. Vorrichtung nach einem der Ansprüche 7 bis 13, dadurch gekennzeichnet, dass an die Vakuumkammer (3) über eine Leitung (42) eine Vakuumpumpe (41) angeschlossen ist, und dass sich in der Leitung (42) zwei parallel geschaltete Ventile (24, 43) befinden, von denen das Ventil (24) als Drosselventil ausgebildet ist.

15. Vorrichtung nach einem der Ansprüche 7 bis 14, dadurch gekennzeichnet, dass an die Kammer (3) über ein Ventil (25) ein Leckdetektor (27) angeschlossen ist, der ein Massenspektrometer (47) und eine im Gegenstrom vom Testgas durchströmte Hochvakuumpumpe (46) umfasst.

16. Vorrichtung nach einem der Ansprüche 7 bis 15, dadurch gekennzeichnet, dass die Kammer (3) mit einer seitlich angeordneten Zusatzkammer (51) ausgerüstet ist, an die die zur Lecksuche notwendigen Mittel angeschlossen sind.

17. Vorrichtung nach einem der Ansprüche 7 bis 16, dadurch gekennzeichnet, dass die Prüflingsanschlüsse (13, 14) mit zwischenevakuierten Doppeldichtungen ausgerüstet sind.

18. Vorrichtung nach einem der Ansprüche 7 bis 17, dadurch gekennzeichnet, dass sie eine Arbeitsfläche (2) aufweist, dass sich oberhalb der Arbeitsfläche (2) Bedienungs- und Anzeigegeräte befinden und dass sich unterhalb der Arbeitsfläche (2) Ventile, Messröhren, Vakuumpumpen usw. befinden.

## Claims

1. A method for integral leak detection in an evaporator (7) for refrigerating machines with the aid of a device suitable for carrying out said method, this device comprising a chamber (3), which is used for receiving the evaporator (7), can be sealed in a vacuum-tight manner and is equipped with test sample terminals (13, 14), which are used for producing the connection of measuring devices with an inlet aperture (9) and an outlet aperture (12) of the cavity (8) of the evaporator (7), characterised in that, following fitting of the evaporator (7) in the chamber (3), at least one further measurement is carried out in addition to the integral leak detection, namely a measurement of the flow through the cavity (8) and/or a measurement of the volume of the cavity (8) of the evaporator (7).

2. A method according to claim 1, characterised in that a flow measurement is firstly carried out followed by the leak detection.

3. A method according to claim 1, characterised in that a volume measurement is firstly carried out followed by the leak detection.

4. A method according to claim 1, 2 or 3, characterised in that the flow measurement, the volume measurement and the leak detection are carried out in succession.

5. A method according to one of claims 1 to 4,
characterised in that, for the volume measurement in the test sample (7) (sic), a pressure increase is generated and the gradient of the pressure increase curve is used as the basis for the calculation of the volume, namely in a region in which the pressure increase is still practically linear.

6. A method according to one of the preceding claims, characterised in that, in order to carry out the leak detection, helium is used as a test gas and a leak detector (27) operating according to the counterflow principle is used.

7. A device for carrying out a method for integral leak detection in an evaporator (7) for refrigerating machines with the aid of a device suitable for carrying out said method, this device comprising a chamber (3), which is used for receiving the evaporator (7), can be sealed in a vacuum-tight manner and is equipped with test sample terminals (13, 14), which are used for producing the connection of measuring devices with an inlet aperture (9) and an outlet aperture (12) of the cavity (8) of the evaporator (7), and, following fitting of the evaporator (7) in the chamber (3), at least one further measurement being carried out in addition to the integral leak detection, namely a measurement of the flow through the cavity (8) and/or a measurement of the volume of the cavity (8), characterised in that the test sample terminal (13) is connected via a line (31) to a compressed gas source (35) and a flow meter (17) and a valve (15) are disposed in the line (31).

8. A device according to claim 7, characterised in that a bypass line (36) with a valve (16) is associated with the flow meter (17) and the valve (15).

9. A device according to one of claims 7 or 8,
characterised in that the test sample terminal (14) can be connected via a line (32) with valves (18, 34) to a vacuum pump (37).

10. A device according to claim 9, characterised in that connecting lines with a relief valve (33), a helium supply valve (21) and a flood valve (22) open into the line (32) between the valves (18 and 34).

11. A device according to claim 9 or 10, characterised in that a pressure measuring device (26) is connected to the line (32) between the valves (18 and 34).

12. A device according to one of claims 9, 10 or 11,
characterised in that a pressure measuring device (19) is connected to the line (32) between the test sample terminal (14) and the valve (18).

13. A device according to one of claims 7 to 12,
characterised in that the section of the line (31) lying between the test sample terminal (13) and the valve (15) and the section of the line (32) lying between the test sample terminal (14) and the valve (18) can be connected to one another via the valve (38).

14. A device according to one of claims 7 to 13,
characterised in that a vacuum pump (41) is connected to the vacuum chamber (3) via a line (42), and two valves (24, 43) connected in parallel are disposed in the line (42), of which the valve (24) is constructed as a throttle valve.

15. A device according to one of claims 7 to 14,
characterised in that a leak detector (27) is connected to the chamber (3) via a valve (25), which leak detector comprises a mass spectrometer (47) and a high vacuum pump (46), through which test gas flows in counterflow.

16. A device according to one of claims 7 to 15,
characterised in that the chamber (3) is equipped with a laterally arranged additional chamber (51), to which means required for the leak detection are connected.

17. A device according to one of claims 7 to 16,
characterised in that the test sample terminals (13, 14) are equipped with intermediately evacuated double seals.

18. A device according to one of claims 7 to 17,
characterised in that it comprises an operating surface (2), operating and display devices are arranged above the operating surface (2) and valves, measurement pipes, vacuum pumps etc. are disposed beneath the operating surface (2).

## Revendications

1. Procédé pour la recherche intégrale de fuites sur un évaporateur (7) pour machine frigorifique, à l'aide d'un dispositif approprié pour la mise en oeuvre de ce procédé, ce dispositif comprenant une chambre (3) susceptible d'être fermée de manière étanche au vide et servant à recevoir l'évaporateur (7), ladite chambre étant équipée de raccordements de test (13, 14) qui servent à établir la liaison de dispositifs de mesure avec une ouverture d'entrée (9) ainsi qu'avec une ouverture de sortie (12) de la cavité (8) de l'évaporateur (7), caractérisé en ce qu'après mise en place de l'évaporateur (7) dans la chambre (3), on procède, en plus de la recherche de fuite intégrale, à au moins une autre mesure, et ceci à une mesure du débit à travers la cavité (8) et/ou une mesure du volume de la cavité (8) de l'évaporateur (7).

2. Procédé selon la revendication 1, caractérisé en ce que l'on exécute tout d'abord une mesure de débit, puis en ce que l'on procède ensuite à la recherche de fuites.

3. Procédé selon la revendication 1, caractérisé en ce que l'on exécute tout d'abord une mesure de volume, puis en ce que l'on procède ensuite à la recherche de fuites.

4. Procédé selon l'une des revendications 1, 2 et 3, caractérisé en ce que l'on exécute l'une après l'autre la mesure de débit, la mesure de volume, et la recherche de fuites.

5. Procédé selon l'une des revendications 1 à 4, caractérisé en ce que pour la mesure de volume dans l'appareil soumis aux essais (7), on engendre une augmentation de pression, et en ce que pour le calcul du volume, on prend comme base la pente de la courbe de montée en pression, et ceci dans une plage dans laquelle la montée en pression est pratiquement encore linéaire.

6. Procédé selon l'une des revendications précédentes, caractérisé en ce que pour exécuter la recherche de fuite, on emploie de l'hélium comme gaz de test, et un détecteur de fuite (27) qui fonctionne suivant le principe à contre-courant.

7. Dispositif pour la mise en oeuvre d'un procédé pour la recherche intégrale de fuites sur un évaporateur (7) pour machine frigorifique à l'aide d'un dispositif approprié pour la mise en oeuvre de ce procédé, ledit dispositif comprenant une chambre (3) susceptible d'être refermée de manière étanche au vide et servant à recevoir l'évaporateur (7), ladite chambre étant équipée de raccordements de test (13, 14), lesquels servent à établir la liaison de dispositifs de mesure avec une ouverture d'entrée (9) et avec une ouverture de sortie (12) de la cavité (8) de l'évaporateur (7), et après mise en place de l'évaporateur (7) dans la chambre (3) on procède, en plus de la recherche intégrale de fuites, à au moins une autre mesure, et ceci à une mesure du débit à travers la cavité (8) et/ou une mesure du volume de la cavité (8), caractérisé en ce que le raccordement de test (13) est raccordé à une source de gaz sous pression (35) via une conduite (31), et en ce que dans la conduite (31) sont prévus un débitmètre (17) et une vanne (15).

8. Dispositif selon la revendication 7, caractérisé en ce qu'au débitmètre (17) et à la vanne (15) est associée une conduite de by-pass (36) avec une vanne (16).

9. Dispositif selon l'une ou l'autre des revendications 7 et 8, caractérisé en ce que le raccordement de test (14) est susceptible d'être raccordé à une pompe à vide (37) via une conduite (32) avec des vannes (18, 34).

10. Dispositif selon la revendication 9, caractérisé en ce que dans la conduite (32) entre les vannes (18 et 34) débouchent des conduites de raccordement avec une vanne de détente (33), une vanne d'alimentation d'hélium (21), et une vanne de remplissage (22).

11. Dispositif selon l'une ou l'autre des revendications 9 et 10, caractérisé en ce qu'un appareil de mesure de pression (26) est raccordé à la conduite (32) entre les vannes (18 et 34).

12. Dispositif selon l'une des revendications 9, 10 et 11, caractérisé en ce qu'un appareil de mesure de pression (19) est raccordé à la conduite (32) entre le raccordement de test (14) et la vanne (18).

13. Dispositif selon l'une des revendications 7 à 12, caractérisé en ce que le tronçon de la conduite (31) disposé entre le raccordement de test (13) et la vanne (15) et le tronçon de la conduite (32) disposé entre le raccord de test (14) et la vanne (18) sont susceptibles d'être reliés l'un à l'autre par l'intermédiaire de la vanne (38).

14. Dispositif selon l'une des revendications 7 à 13, caractérisé en ce qu'une pompe à vide (41) est raccordée à la chambre à vide (3) via une conduite (42), et en ce que dans la conduite (42) sont prévues deux vannes (24, 43) branchées en parallèle, parmi lesquelles la vanne (24) est réalisée sous forme de vanne à étranglement.

15. Dispositif selon l'une des revendications 7 à 14, caractérisé en ce qu'un détecteur de fuites (24) est raccordé à la chambre (3) via une vanne (25), ledit détecteur comprenant un spectromètre de masse (47) et une pompe à vide poussé (46) traversée à contre-courant par du gaz de test.

16. Dispositif selon l'une des revendications 7 à 15, caractérisé en ce que la chambre (3) est équipée d'une chambre additionnelle (51) agencée latéralement, à laquelle sont raccordés les moyens nécessaires pour la recherche de fuites.

17. Dispositif selon l'une des revendications 7 à 16, caractérisé en ce que les raccordements de test (13, 14) sont équipés de joints doubles à évacuation intermédiaire.

18. Dispositif selon l'une des revendications 7 à 17, caractérisé en ce qu'il comprend une surface de travail (2), en ce que des appareils de manipulation et d'affichage sont disposés au-dessus de la surface de travail (2), et en ce que les vannes, tubes de mesure, pompes à vide, etc., sont disposés au-dessous de la surface de travail (2).
